# EUROPEAN PATENT SPECIFICATION

(11) **EP 2 645 446 B1**
(45) Date of publication and mention of the grant of the patent: **16.10.2019**
(21) Application number: 13154748.1
(22) Date of filing: 11.02.2013
(51) Int. Cl.: H01M 2/02, H01M 2/10

(54) **Rechargeable battery**
Wiederaufladbare Batterie
Batterie rechargeable

(30) Priority: 29.03.2012 US 201261617452 P; 30.01.2013 US 201313754762
(43) Date of publication of application: 02.10.2013
(73) Proprietor: Samsung SDI Co., Ltd., Yongin-si, Gyeonggi-do (KR); ROBERT BOSCH GMBH, 70442 Stuttgart (DE)
(72) Inventor: AHN, Byung-Kyu, Gyeonggi-do (KR); KIM, Joong-Heon, Gyeonggi-do (KR); PARK, Zin, Gyeonggi-do (KR); KIM, Duk-Jung, Gyeonggi-do (KR); GUEN, Min-Hyung, Gyeonggi-do (KR); KIM, Myoung-Chul, Gyeonggi-do (KR)
(74) Representative: Gulde & Partner

(56) References cited:
- EP-A1- 1 717 882
- EP-A2- 2 284 926
- US-A1- 2005 164 080

## Description

The present invention relates to a rechargeable battery, more particularly, to a rechargeable battery including a configuration for efficiently insulating a case of the rechargeable battery.

### Description of the Related Art

Unlike a primary battery that cannot be recharged, a rechargeable battery can be repeatedly charged and discharged. EP 2 284 926 A2, EP 1 717 882 A1 and US 2005/0164080 A1 concern related art.

A small-capacity rechargeable battery is used for small portable electronic devices such as mobile phones, notebook computers, camcorders, and the like, while a large-capacity rechargeable battery is used as a motor-driving power source or large-capacity power storage device for a hybrid vehicle and the like.

Nowadays, a high power rechargeable battery using a non-aqueous electrolyte of a high energy density has been developed, and the high power rechargeable battery is formed as a large capacity rechargeable battery by coupling a plurality of rechargeable batteries in series to use for driving a motor of a device, for example, an electric vehicle requiring a large amount of electric power.

The rechargeable battery may have a cylindrical shape or a prismatic shape. An outer surface of a case of the rechargeable battery is coated with an insulating material or is wrapped with an injection insulating tape to prevent a current in the rechargeable battery from being discharged to the outside of the rechargeable battery through the case and intercept electrical contact with neighboring rechargeable batteries.

However, when the outer surface of the case is coated with an insulating material, it is impossible to coat the entire outer surface of the case where a cap plate is provided while preventing the same from being exposed to the outside because of a problem of controlling a thickness of a coated layer to be constant and various elements installed on the cap plate.

Further, when the outer surface of the case is wrapped with an insulating tape, a part of the outer surface of the case may be exposed between the insulating tape wrapping the outer surfaces of the case. Resultantly, the outer surface of the case is incompletely insulated so electricity may be discharged to the outside of the case or a short circuit may be generated between neighboring rechargeable batteries.

In addition, to perfectly close and seal the outer surface of the case for the purpose of overcoming the above-noted problem, a process for closing and sealing the outer surface of the case becomes complicated.

### SUMMARY

The described technology has been made in an effort to provide a rechargeable battery including a configuration for insulating an outer surface of a case and preventing electricity from being discharged to the outer surface of the case.

The present invention has been made in another effort to provide a rechargeable battery including a configuration for easily insulating an outer surface of a case.

According to the present invention there is provided a rechargeable battery with the features of claim 1.

Further embodiments of the invention could be learned form the dependent claims and the following description.

According to the invention, the outer surface of the case can be insulated so that the current generated inside the rechargeable battery may not be discharged to the outer surface of the case, and the outer surface of the case can be easily closed and sealed.

### BRIEF DESCRIPTION OF THE DRAWINGS

FIG. 1 shows a perspective view of a rechargeable battery according to an exemplary embodiment of the present invention.
FIG. 2 shows a cross-sectional view with respect to a line II-II in FIG. 1.
FIG. 3 shows an exploded perspective view of a rechargeable battery which is not part of the present invention.
FIG. 4 shows a perspective view of a rechargeable battery according to an exemplary variation of a rechargeable battery shown in FIG. 1, which is not part of the present invention.
FIG. 5 shows an exploded perspective view of a rechargeable battery according to an exemplary embodiment of the present invention.
FIG. 6 shows an exploded perspective view of a rechargeable battery according to an exemplary embodiment, which is not part of the present invention.
FIG. 7 shows an exploded perspective view of a rechargeable battery according to an exemplary embodiment, which is not part of the present invention.
FIG. 8 shows an exploded perspective view of a rechargeable battery according to a further exemplary embodiment, which is not part of the present invention.
FIG. 9 shows a perspective view of a combined state of a rechargeable battery shown in FIG. 8, which is not part of the present invention.

### DETAILED DESCRIPTION

Hereinafter, embodiments of the present invention will be described in detail with reference to the accompanying drawings.

In the description and drawings, like reference numerals refer to like elements throughout.

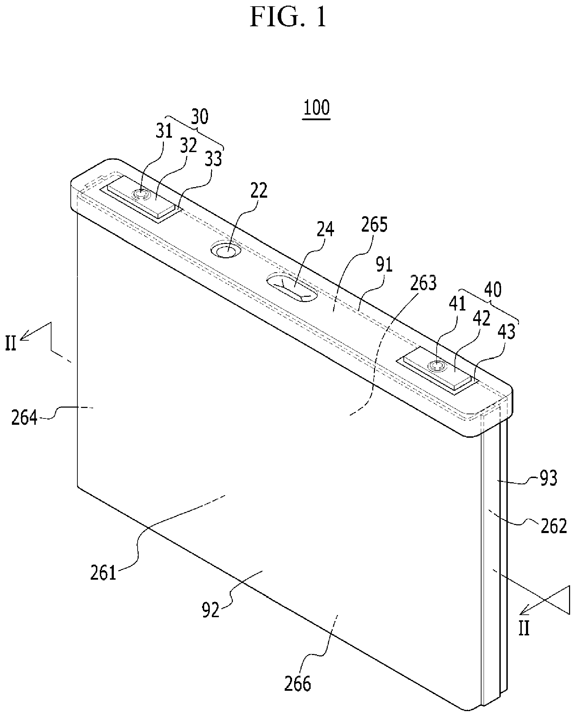

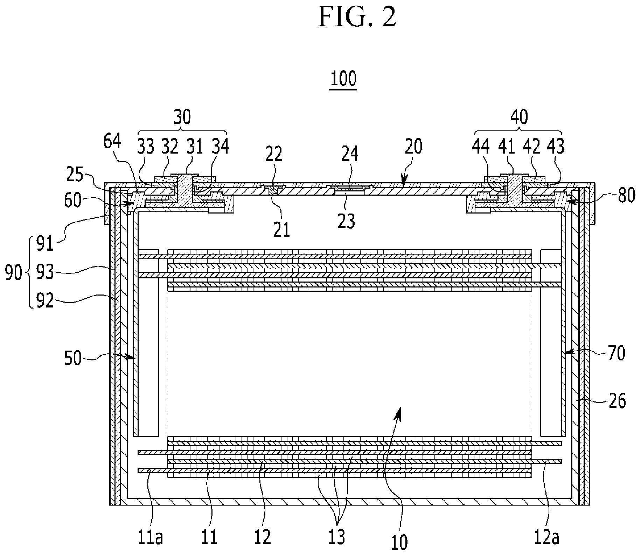

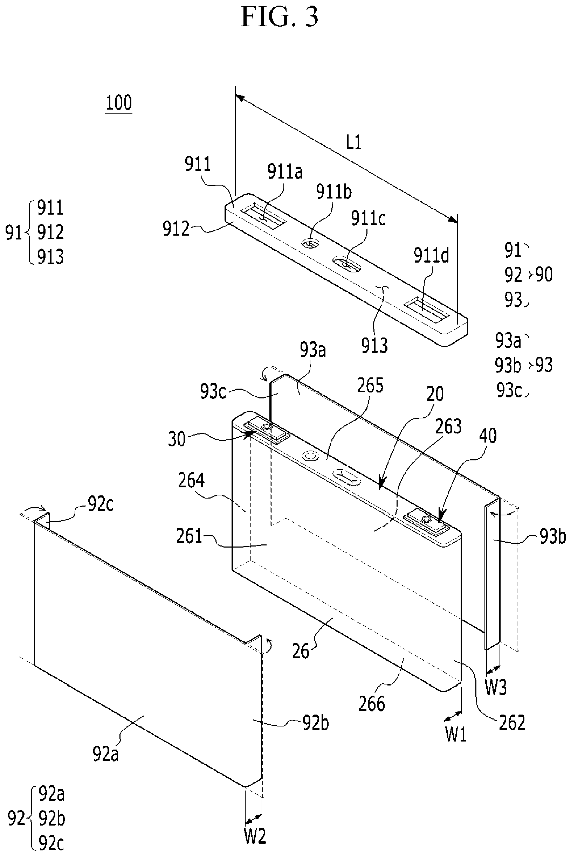

FIG. 1 shows a perspective view of a rechargeable battery according to an exemplary embodiment of the present invention, and FIG. 2 shows a cross-sectional view with respect to a line II-II in FIG. 1. FIG. 3 shows an exploded perspective view of a rechargeable battery, which is not part of the present invention.

Referring to FIG. 1 and FIG. 2, the rechargeable battery 100 includes a plurality of electrode assemblies 10 wound with a separator 13 between a first electrode 11 and a second electrode 12, a case 26 in which the electrode assembly 10 is installed, a first terminal 30 and a second terminal 40 electrically connected to the electrode assembly 10 and a first electrode current collecting member 50 or a second electrode current collecting member 70, a cap plate 20 combined to an opening formed in the case 26, and first and second internal insulating members 60 and 80 installed in the case 26.

The rechargeable battery 100 according to the first exemplary embodiment is exemplarily illustrated as a lithium ion rechargeable battery formed in the shape of a prism. However, the present invention is not limited thereto, and the present invention may be applied to a lithium polymer battery, a cylindrical battery, or the like.

Also, the first electrode 11 can be configured to be a negative electrode and the second electrode 12 can be configured to be a positive electrode, or the first electrode 11 can be configured to be a positive electrode and the second electrode 12 can be configured to be a negative electrode.

The electrode assembly 10 can be formed in a jellyroll shape by spirally winding the first electrode 11, the second electrode 12, and the separator 13. The first electrode 11 and the second electrode 12 can each include a current collector made of a thin-film metal foil, and an active material coated on a surface of the current collector.

Further, the first electrode 11 and the second electrode 12 include a coated region generated by coating an active material on the current collector, and a first electrode uncoated region 11a and a second electrode uncoated region 12a having no coated active material on the current collector.

In this instance, the coated region forms most of the first electrode 11 and the second electrode 12 in the electrode assembly 10, and the first electrode and the second electrode uncoated regions 11a and 12a can be disposed in the jellyroll state on both sides of the coated region.

However, the present invention is not limited thereto, and the electrode assembly 10 may have a structure in which the first electrode 11 and the second electrode 12 formed as a plurality of sheets are stacked with the separator 13 therebetween.

The first terminal 30 can be electrically connected to the first electrode uncoated region 11a of the electrode assembly 10 with the first electrode current collecting member 50 as a medium, and the second terminal 40 can be electrically connected to the second electrode uncoated region 12a with the second electrode current collecting member 70 as a medium.

Also, the first and second terminals 40 are provided on opposite ends of the cap plate 20 so that they are installed to be passed through the cap plate 20 and be exposed outside the rechargeable battery 100.

The case 26 is formed approximately in a hexahedral shape, and an opening is formed in one side thereof. Further, the cap plate 20 is provided on an opening portion of the case 26 to receive the electrode assembly 10 inside the case 26.

The cap plate 20 is made to be a thin plate, and it is combined with the opening of the case 26 to close and seal the opening. Also, an electrolyte injection opening 21 for injecting an electrolyte solution into the closed and sealed case 26 is formed in the cap plate 20, and the electrolyte injection opening 21 can be sealed by a sealing cap 22 after the electrolyte solution is injected. When an internal pressure of the closed and sealed case 26 is greater than a predetermined pressure, a vent hole 23 in which a vent plate 24 is installed can be formed in the cap plate 20.

The first and second terminals 30 and 40 include first and second rivets 31 and 41, first and second terminal plates 32 and 42, a first terminal insulating member 33 installed between the first and second terminal plates 32 and 42 and the cap plate 20, a conductive connecting member 43, and first and second gaskets 34 and 44.

According to the present exemplary embodiment, the cap plate 20 can be electrically connected to the second terminal 40 by the conductive connecting member 43 so it can have a negative or positive polarity.

However, the first terminal 30 can include a circular cylinder type of terminal (not shown) that is not a plate-type terminal.

Also, an insulating member rather than the conductive connecting member 43 can be installed between the cap plate 20 and the second rivet 41. Therefore, the cap plate 20 may not be electrically connected to the second terminal 40.

Further, an external insulating member 90 includes an insulating cover 91, a first insulating tape 92, and a second insulating tape 93.

Here, the insulating cover 91 and the first and second insulating tapes 92 and 93 are combined to the outer surface of the case 26.

A combination of the external insulating member 90 and the outer surface of the case 26 according to the present exemplary embodiment will now be described in detail with reference to FIG. 3.

The case 26 in a hexahedral shape includes two main sides 261 and 263, two lateral sides 262 and 264, a case top 265 on which the cap plate 20 is installed, and a bottom side 266 provided on the opposite side of the case top 265.

Also, the main sides 261 and 263 of the case 26 are wider than the lateral sides 262 and 264, they face each other, and they are connected by the lateral 262 and 264.

According to alternative embodiments, which are not part of the present invention, the case 26 can have a cylindrical, hexahedral, or pouch shape.

The first and second insulating tapes 92 and 93 of the external insulating member 90 are made of an insulating material (e.g., polyethylene terephthalate).

An adhesive can be applied to one side of the first and second insulating tapes 92 and 93, and it is desirable for the first and second insulating tapes 92 and 93 to be 70 µm to 100 µm thick.

In further detail, the first insulating tape 92 includes a body 92a, a portion 92b, and another portion 92c.

Here, the portions 92b and 92c of the first insulating tape 92 are extending from both ends of the first body 92a.

Therefore, the first body 92a of the first insulating tape 92 can be combined to the first side 261 of the case 26, and the portions 92a and 92b can be combined to the second and fourth sides 262 and 264 of the case 26, respectively.

In this instance, as shown in FIG. 3, the bent portions 92b and 92c are bent in an arrow direction at both ends of the body 922, and are combined to the lateral sides 262 and 264 of the case 26.

Also, a body 93a of the second insulating tape 93 is combined to the main side 263 of the case 26 facing the main side 261 of the case 26 to which the body 92a of the first insulating tape 92 is combined.

Here, the second insulating tape 93 includes bent portions 93b and 93c extending from both ends of the body 93a.

Therefore, when the body 93a is combined to the main side 263 of the case 26, the bent portions 93b and 93c are bent in the arrow direction as shown in FIG. 3 and are then combined with the lateral sides 262 and 264 of the case 26.

A sum of the widths W2 and W3 of the bent portions 92b and 93b should be at the same or, preferably, greater than the width W1 of the lateral side 262. The same applies to the other lateral side 264.

If the sum of the widths W2 and W3 is greater than W1 a step is formed at a part where the bent portions 93b and 93c of the second insulating tape 93 meet the bent portions 92b and 92c of the first insulating tape 92, and it becomes a path on which moisture generated on the outer surface of the case 26 flows.

Therefore, the moisture can be discharged following the step from the outer surface of the case 26.

The insulating cover 91 can be formed through vacuous molding or injection molding, and can be made of one of an acrylonitrile butadiene styrene (ABS) copolymer, polypropylene, polyethylene, and polycarbonate.

Also, the insulating cover 91 includes a body 911, a side 912 protruded on the body 911, and a fixing groove 913 formed between the body 911 and the side 912.

In further detail, the body 911 of the insulating cover 91 includes a first terminal coupling hole 911a, an electrolyte injection opening coupling hole 912b, a vent plate coupling hole 913c, and a second terminal coupling hole 911d.

When the insulating cover 91 is combined to the case top 265 where the cap plate 20 is provided, the first and second terminals 30 and 40 can be inserted into and combined into the first and second terminal coupling holes 911a and 911d of the body 911 of the insulating cover 91, respectively.

Also, the sealing cap 22 for closing and sealing the electrolyte injection opening 21 can be inserted into and combined to the electrolyte injection opening coupling hole 912b, and the vent plate 24 can be inserted into and combined to the vent plate coupling hole 913c.

Therefore, when the insulating cover 91 is combined to the case top 265, the side 912 of the insulating cover 91 can be provided on the first and second insulating tapes 92 and 93.

In this instance, the insulating cover 91 can be forcibly inserted into and combined to the case 20 or it can be combined to the case 26 by applying an adhesive on a surface of the insulating cover 91 facing the case 26.

Therefore, the insulating cover 91 can be closely combined to the case top 265.

Further, the side 912 of the insulating cover 91 can cover a part where an edge of the bent portion 92b of the first insulating tape 92, an edge of the bent portion 93b of the second insulating tape 93, an edge of the bent portion 92c of the first insulating tape 92, and an edge of the bent portion 93c of the second insulating tape 93 meet.

Therefore, exposure of the outer surface of the case 26 at the edge of the bent portion 92b of the first insulating tape 92 and the edge of the bent portion 93b of the second insulating tape 93 can be prevented.

Also, the insulating cover 91 of the external insulating member 90 prevents exposure of the outer surface of the case 26 in a space between the cap plate 20 and the first and second insulating tapes 92 and 93.

As a result, the four sides (261, 262, 263, and 264) of the case 26 and the case top 265 can be closed and sealed without exposure to the outside, and the external insulating member 90 is easily combined to the outer surface of the case 26.

Also, the first and second insulating tapes 92 and 93 have a predetermined thickness (e.g., 70 µm to 100 µm) so the outer surface of the case 26 can be uniformly insulated.

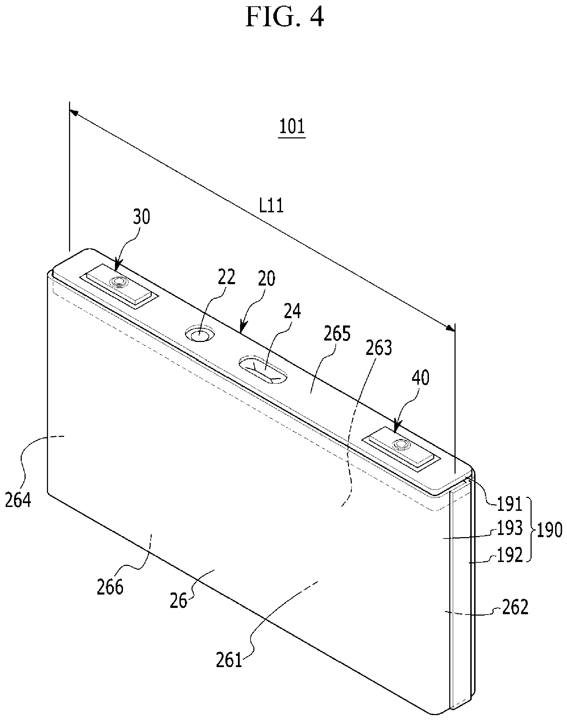

FIG. 4 shows a perspective view of a rechargeable battery according to an exemplary variation of a rechargeable battery shown in FIG. 1, which is not part of the present invention.

Here, the rechargeable battery 101 according to the present exemplary embodiment corresponds to the rechargeable battery 100 according to the first exemplary embodiment except a combination order of an insulating cover 191 of an external insulating member 190 and first and second insulating tapes 192 and 193, so no repeated detailed description will be provided hereinafter.

Referring to FIG. 4, the first and second insulating tapes 192 and 193 of the external insulating member 190 can be installed on the insulating cover 191.

That is, the first and second insulating tapes 192 and 193 can be combined over the insulating cover 191.

Therefore, a length L11 of the insulating cover 191 according to the present embodiment can be formed to be less than a length L1 of the first insulating cover 91 according to the first exemplary embodiment by the sum of thickness of the first and second insulating tapes 192 and 193.

A step formed at the part where the edges of the first and second insulating tapes 192 and 193 meet is provided on the insulating cover 191 so it becomes possible to have no space between the insulating cover 191 and the first and second insulating tapes 192 and 193.

Therefore, when the insulating cover 191 is provided on the step formed at the part where the first and second insulating tapes 192 and 193 meet, no space is formed between the step and the insulating cover 191 so the outer surface of the case 26 is further efficiently insulated from the outside.

Also, the first and second insulating tapes 192 and 193 are provided on the insulating cover 191 so the insulating cover 191 can be stably fixed to the case 26 by the first and second insulating tapes 192 and 193.

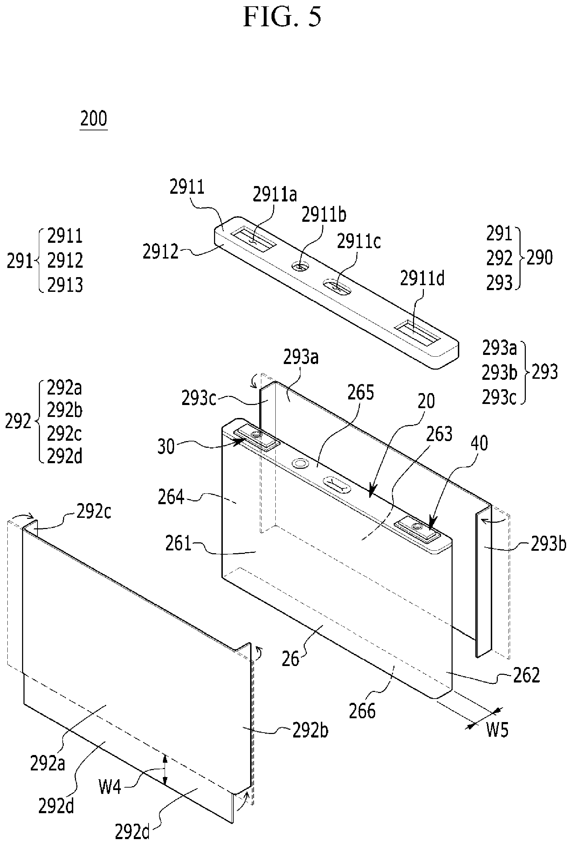

FIG. 5 shows an exploded perspective view of a rechargeable battery according to an exemplary embodiment of the present invention.

Referring to FIG. 5, the rechargeable battery 200 has the same configuration as the rechargeable battery 100 according to the first exemplary embodiment except for an external insulating member 290, and no detailed description on the same configuration will be provided hereinafter.

The external insulating member 290 includes an insulating cover 291, a first insulating tape 292, and a second insulating tape 293.

The insulating cover 291 according to the present exemplary embodiment has the same configuration as the insulating cover 91 according to the first exemplary embodiment, and a detailed description thereof will be omitted.

The insulating cover 291 is combined to the first and second insulating tapes 292 and 293 and is then combined to the outer surface of the case 26.

Referring to FIG. 5, a combination of the external insulating member 290 according to the present exemplary embodiment and the outer surface of the case 26 will now be described in detail.

The first and second insulating tapes 292 and 293 of the external insulating member 290 are made of an insulating material (e.g., polyethylene terephthalate).

In this instance, an adhesive can be applied to one side of the first and second insulating tapes 292 and 293. It is desirable for the first and second insulating tapes 292 and 293 to be 70 µm to 100 µm thick.

In detail, the first insulating tape 292 includes a body 292a, an bent portion 292b, a bent portion 292c, and a bent portion 292d.

The body 292a, the bent portion 292b, and the bent portion 292c of the first insulating tape 292 according to the present exemplary embodiment have the same configuration as the first body 92a, the bent portion 92b, and the bent portion 92c of the first insulating tape 92 according to the first exemplary embodiment, and their detailed description will be omitted.

The bent portion 292d of the first insulating tape 292 is formed at one end of the body 292a.

In further detail, the bent portion 292d of the first insulating tape 292 is formed in a direction that is perpendicular with respect to a direction in which the bent portions 292b and 292c are extended.

Therefore, when the first insulating tape 292 is combined to the outer surface of the rectangular parallelepiped-shaped case 26, the body 292a of the first insulating tape 292 is combined to the main side 261 of the case 26, the bent portions 292b and 292c are combined to the lateral sides 262 and 264 of the case 26, and the bent portion 292d of the first insulating tape 292 can be combined to the bottom side 266 for connecting narrow sides of the case 26.

In this instance, a width W4 of the bent portion 292d of the first insulating tape 292 can be formed to be equal to or greater than a width W5 of the bottom side 266 to which the bent portion 292d is combined.

The second insulating tape 293 includes a body 293a, a bent portion 293b, and a bent portion 293c having the same configuration as the second insulating tape 93 according to the first exemplary embodiment so it will not be described here in detail.

Resultantly, the external insulating member 290 can be combined to the four sides (261, 262, 263, and 264), the case top 265, and the bottom side 266 of the case 26.

Therefore, the external insulating member 290 blocks exposure of the entire outer surface of the case 26 to the outside and closes and seals the case 26.

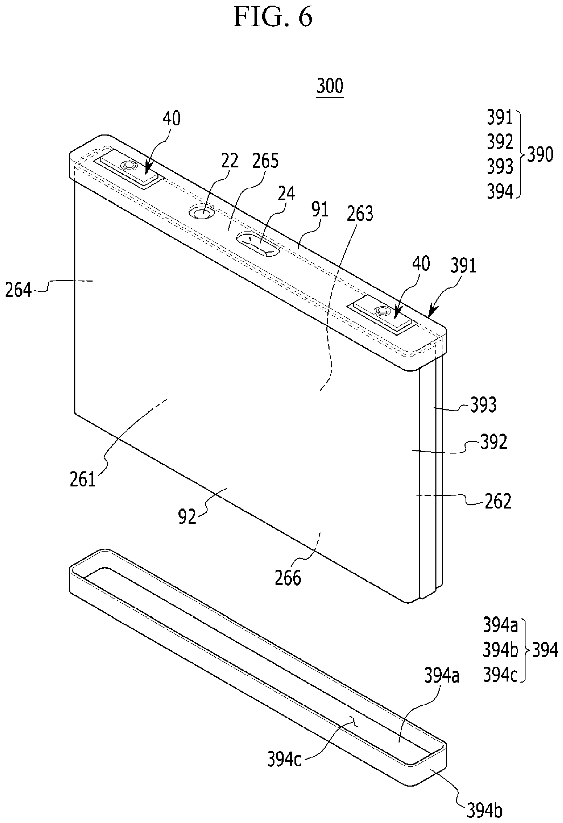

FIG. 6 shows an exploded perspective view of a rechargeable battery according to an exemplary embodiment, which is not part of the present invention.

Referring to FIG. 6, the rechargeable battery 300 has the same configuration as the rechargeable battery 100 according to the first exemplary embodiment except for an external insulating member 390 so the corresponding detailed description will not be provided.

The external insulating member 390 of the rechargeable battery 300 includes an insulating cover 391, a first insulating tape 392, a second insulating tape 393, and a bottom insulating cover 394.

The insulating cover 391, the first insulating tape 392, and the second insulating tape 393 of the external insulating member 390 have the same configuration as the insulating cover 91, the first insulating tape 92, and the second insulating tape 93 of the insulating cover 90 according to the first exemplary embodiment, so no detailed description will be provided.

The bottom insulating cover 394 of the external insulating member 390 includes a body 394a, a side 394b extended from the body 394a, and a receiving groove 394c provided between the body 394a and the side 394b.

Here, the bottom insulating cover 394 can be formed through vacuous molding or injection, and it can be made of one of an acrylonitrile butadiene styrene (ABS) copolymer, polypropylene, polyethylene, and polycarbonate.

While the first and second insulating tapes 392 and 393 are combined to the case 26, the bottom side 266 can be inserted into and fixed to the receiving groove 394c of the bottom insulating cover 394.

Here, the bottom insulating cover 394 can be combined to the case 26 through forcible insertion.

The combination of the bottom insulating cover 394 and the case 26 is not restricted to the forcible insertion, and the bottom insulating cover 394 and the case 26 can be combined by a double-sided adhesive tape (not shown) combined by the bottom insulating cover 394.

When the bottom insulating cover 394 is combined to the bottom side 266, the side 394b of the bottom insulating cover 394 can be provided on the first and second insulating tapes 392 and 393.

Therefore, the bottom insulating cover 394 can be closely combined to the bottom side 266.

The side 394b of the bottom insulating cover 394 can cover a part where the edge of the first insulating tape 392 meets the edge of the second insulating tape 393.

Therefore, contact of the outer surface of the case 26 and the outside at the edge of the first insulating tape 392 and the edge of the second insulating tape 393 can be efficiently intercepted.

Also, the bottom insulating cover 394 of the external insulating member 390 prevents exposure of the outer surface of the case 26 in a space between the bottom side 266 and the first and second insulating tapes 392 and 393.

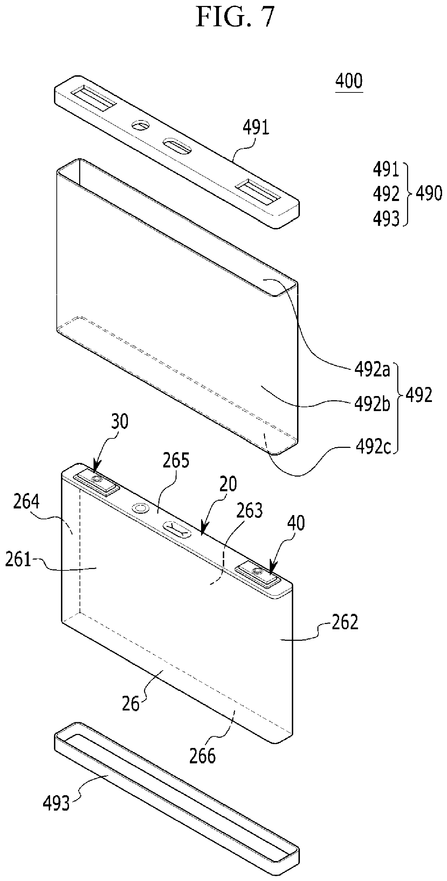

FIG. 7 shows an exploded perspective view of a rechargeable battery according to an exemplary embodiment, which is not part of the present invention.

Referring to FIG. 7, the rechargeable battery 400 has the same configuration as the rechargeable battery 300 according to the third exemplary embodiment except for an external insulating member 490 so no corresponding description will be provided.

The external insulating member 490 of the rechargeable battery 400 includes an insulating cover 491, an insulating tape 492, and a bottom insulating cover 493.

The insulating cover 491 and the bottom insulating cover 493 of the external insulating member 490 have the same configuration as the insulating cover 391 and the bottom insulating cover 394 according to the third exemplary embodiment, so repeated description will be omitted.

The insulating tape 492 of the external insulating member 490 includes a first opening 492a, a body 492b, and a second opening 492c.

In further detail, the body 492c of the insulating tape 492 includes a hollow unit into which the case 26 is inserted. Here, the body 492c of the insulating tape 492 is formed through injection molding, and an adhesive is applied to the hollow area of the body 492c.

Therefore, when the case 26 is inserted into the hollow area of the insulating tape 492, the body 492c of the insulating tape 492 and the four sides (261, 262, 263, and 264) of the case 26 can be combined to the outer surface of the case 26.

Also, the insulating cover 491 is combined to the part where the first opening 492a of the insulating tape 492 is provided, and the bottom insulating cover 493 is combined to the part where the second opening 492c of the insulating tape 492 is provided.

Therefore, all sides (e.g., six sides of a cuboid) of the case 26 can be closed and sealed by the insulating member 490.

Further, the case 26 is inserted into the insulating tape 492 and is combined to the insulating tape 492 so the outer surface of the case 26 is easily insulated.

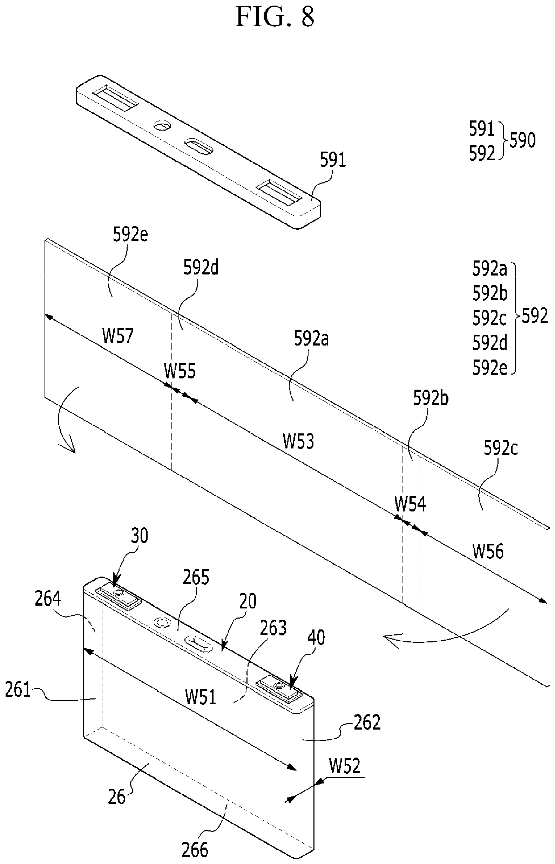

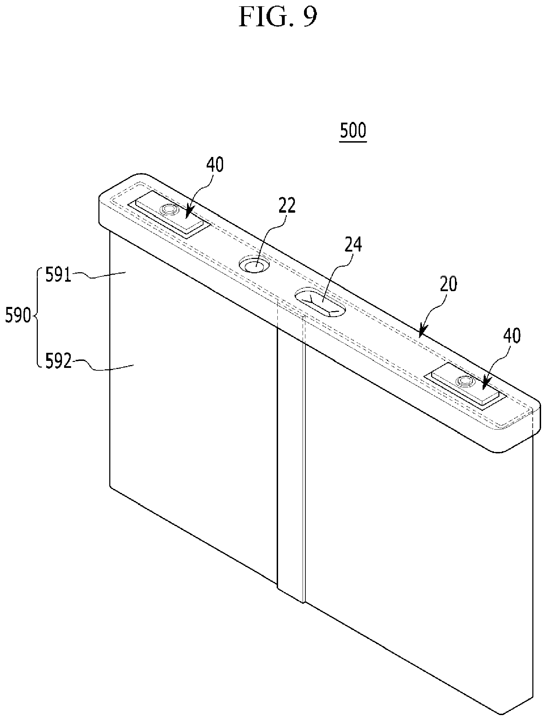

FIG. 8 shows an exploded perspective view of a rechargeable battery according to a further exemplary embodiment, which is not part of the present invention and FIG. 9 shows a perspective view of a combined state of a rechargeable battery shown in FIG. 8.

Referring to FIG. 8 and FIG. 9, the rechargeable battery 500 has the same configuration as the rechargeable battery 100 according to the first exemplary embodiment except for an external insulating member 590, so the same configuration will not be described.

The external insulating member 590 of the rechargeable battery 500 includes an insulating cover 591 and an insulating tape 592.

The insulating cover 591 of the external insulating member 590 has the same configuration as the insulating cover 91 of the external insulating member 90 according to the first exemplary embodiment, so no detail description thereof will be provided.

The insulating tape 592 of the external insulating member 590 according to the present exemplary embodiment is made of an insulating material (e.g., polyethylene terephthalate).

Also, an adhesive can be applied to one side of the insulating tape 592. In this instance, it is desirable for the insulating tape 592 to be 70 µm to 100 µm thick.

In further detail, the insulating tape 592 includes a first portion 592a, a second portion 592b, a third portion 592c, a fourth portion 592d, and a fifth portion 592e.

Referring to FIG. 8 and 9, the first portion 592a of the insulating tape 592 is combined to the main side 263 of the case 26. In this instance, a width W53 of the first portion 592a should substantially correspond to a width W51 of the main side 263 of the case 26.

Also, the second portion 592b and the fourth portion 592d are combined to the lateral sides 262 and 264 of the case 26, respectively, and a width W54 of the second portion 592b and a width W55 of the fourth portion corresponds to a width W52 of the lateral sides 262, 264 of the case 26.

Further, the third portion 592c and the fifth portion 592e are combined to the main side 261 of the case 26.

A sum of a width W56 of the third portion 592c and a width W57 of the fifth portion 592e is equal to or more than a width W51 of the main side 261 of the case 26.

It is desirable for the sum of the width W56 of the third portion 592c and the width W57 of the fifth portion 592e to be greater than the width W51 of the main side 261 of the case 26.

Hence, the third portion 592c and the fifth portion 592e of the insulating tape 592 are provided to be overlapped with each other so they can be combined to the first side 261 of the case 26.

In this instance, a step can be formed at the part where the third portion 592c of the insulating tape 93 meets the fourth portion 592e.

Resultantly, the four sides (261, 262, 263, and 264) of the case 26 can be closed and sealed by the external insulating member 590 without exposure to the outside.

Further, the four sides (261, 262, 263, and 264) of the case 26 are wrapped by the insulating tape 592, and the insulating cover 591 combined on the insulating tape 592 is combined to the case top 265 so the case 26 is easily combined to the external insulating member 590.

## Claims

1. A rechargeable battery (100) comprising:
a case (26);
an electrode assembly (10) received by the case (26);
a cap plate (20) for closing and sealing an opening of the case (26);
an insulating cover (91) made of an insulating material, arranged on and covering the cap plate (20), wherein the case (26) has a hexahedral shape including first and second main sides (261, 263), first and second lateral sides (262, 264) and a bottom side (266) and
insulating tapes (92, 93) made of an insulating material and covering the main sides (261, 263) and the lateral sides (262, 264) of the case (26) wherein the insulating tapes (92, 93) overlap each other on the first and second lateral sides (262, 264),
**characterized in that**
the insulating cover (91) overlaps the insulating tapes (92, 93) and wherein a first of the insulating tapes (92, 93) comprises a bent portion combined to the bottom side (266) wherein a width of the bent portion is greater than a width of the bottom side (266) to which the bent portion is combined.

2. The rechargeable battery of one claim 1, wherein a thickness of the insulating tapes (92, 93) is in the range of 70 µm to 100 µm.

3. The rechargeable battery of one of the preceding claims, wherein the insulating tapes (92, 93) are made of polyethylene terephthalate.

4. The rechargeable battery of one of the preceding claims, wherein the insulating cover (91) overlaps the insulating tapes (92, 93) at the main sides (261, 263) and lateral sides (262, 264) of the case (26).

5. The rechargeable battery of one of the preceding claims, wherein the insulating cover (91) is made of one of an acrylonitrile butadiene styrene (ABS) copolymer, polypropylene, polyethylene, and polycarbonate.

6. The rechargeable battery of claim 4, wherein a part of the insulating cover (91) extends over a part of the main sides (261, 263) and lateral sides (262, 264) of the case (26) as well as the insulating tapes (92, 93) being arranged in said part of the main sides (261, 263) and lateral sides (262, 264).

## Patentansprüche

1. Eine wiederaufladbare Batterie (100), aufweisend:
ein Gehäuse (26);
eine Elektrodenanordnung (10), die vom Gehäuse (26) aufgenommen ist;
eine Deckplatte (20) zum Schließen und Abdichten einer Öffnung des Gehäuses (26);
eine Isolierabdeckung (91), die aus einem Isoliermaterial besteht, auf der Deckplatte (20) angeordnet ist und diese bedeckt, wobei das Gehäuse (26) eine hexaedrische Form, die eine erste und zweite Hauptseite (261, 263), eine erste und zweite laterale Seite (262, 264) und eine Unterseite (266) aufweist, aufweist, und
Isolierbänder (92, 93), die aus einem Isoliermaterial bestehen und die Hauptseiten (261, 263) und die lateralen Seiten (262, 264) des Gehäuses (26) bedecken, wobei sich die Isolierbänder (92, 93) auf der ersten und zweiten lateralen Seite (262, 264) überlappen,
**dadurch gekennzeichnet, dass**
die Isolierabdeckung (91) die Isolierbänder (92, 93) überlappt und wobei ein erstes der Isolierbänder (92, 93) einen gebogenen Abschnitt, der mit der Unterseite (266) kombiniert ist, aufweist, wobei eine Breite des gebogenen Abschnitts größer ist als eine Breite der Unterseite (266), mit der der gebogene Abschnitt kombiniert ist.

2. Die wiederaufladbare Batterie nach Anspruch 1, wobei eine Dicke der Isolierbänder (92, 93) im Bereich von 70 µm bis 100 µm liegt.

3. Die wiederaufladbare Batterie nach einem der vorhergehenden Ansprüche, wobei die Isolierbänder (92, 93) aus Polyethylenterephthalat bestehen.

4. Die wiederaufladbare Batterie nach einem der vorhergehenden Ansprüche, wobei die Isolierabdeckung (91) die Isolierbänder (92, 93) an den Hauptseiten (261, 263) und lateralen Seiten (262, 264) des Gehäuses (26) überlappt.

5. Die wiederaufladbare Batterie nach einem der vorhergehenden Ansprüche, wobei die Isolierabdeckung (91) aus einem von einem Acrylnitril-Butadien-Styrol (ABS)-Copolymer, Polypropylen, Polyethylen und Polycarbonat besteht.

6. Die wiederaufladbare Batterie nach Anspruch 4, wobei sich ein Teil der Isolierabdeckung (91) über einen Teil der Hauptseiten (261, 263) und lateralen Seiten (262, 264) des Gehäuses (26) sowie der Isolierbänder (92, 93), die im besagten Teil der Hauptseiten (261, 263) und lateralen Seiten (262, 264) angeordnet sind, erstreckt.

## Revendications

1. Batterie rechargeable (100) comprenant :
un boîtier (26) ;
un ensemble d'électrodes (10) reçu par le boîtier (26) ;
une plaque de capuchon (20) pour fermer et sceller une ouverture du boîtier (26) ;
un couvercle isolant (91) réalisé en matériau isolant, agencé sur la plaque de capuchon (20) et recouvrant celle-ci, où le boîtier (26) a une forme hexaédrique comportant des premier et deuxième côtés principaux (261, 263), des premier et deuxième côtés latéraux (262, 264) et un côté inférieur (266) et
des rubans isolants (92, 93) réalisés en matériau isolant et recouvrant les côtés principaux (261, 263) et les côtés latéraux (262, 264) du boîtier (26) où les rubans isolants (92, 93) se chevauchent sur les premier et deuxième côtés latéraux (262, 264),
**caractérisée en ce que**
le couvercle isolant (91) chevauche les rubans isolants (92, 93) et où un premier ruban des rubans isolants (92, 93) comprend une partie courbée combinée au côté inférieur (266), où une largeur de la partie courbée est supérieure à une largeur du côté inférieur (266) auquel la partie courbée est combinée.

2. Batterie rechargeable de la revendication 1, dans laquelle une épaisseur des rubans isolants (92, 93) est comprise entre 70 µm et 100 µm.

3. Batterie rechargeable de l'une des revendications précédentes, dans laquelle les rubans isolants (92, 93) sont réalisés en polyéthylène téréphtalate.

4. Batterie rechargeable de l'une des revendications précédentes, dans laquelle le couvercle isolant (91) chevauche les rubans isolants (92, 93) au niveau des côtés principaux (261, 263) et des côtés latéraux (262, 264) du boîtier (26).

5. Batterie rechargeable de l'une des revendications précédentes, dans laquelle le couvercle isolant (91) est réalisé en l'un d'un copolymère d'acrylonitrile-butadiène-styrène (ABS), de polypropylène, de polyéthylène et de polycarbonate.

6. Batterie rechargeable de la revendication 4, dans laquelle une partie du couvercle isolant (91) s'étend sur une partie des côtés principaux (261, 263) et des côtés latéraux (262, 264) du boîtier (26) ainsi que les rubans isolants (92, 93) qui sont agencés dans ladite partie des côtés principaux (261, 263) et des côtés latéraux (262, 264) .
